# EUROPÄISCHE PATENTSCHRIFT

(11) **EP 0 525 569 B1**
(45) Veröffentlichungstag und Bekanntmachung des Hinweises auf die Patenterteilung: **18.10.1995**
(21) Anmeldenummer: 92112357.6
(22) Anmeldetag: 20.07.1992
(51) Int. Cl.: A01G 3/02

(54) **Astschere**
Secateurs for trees
Sécateur pour arbres

(30) Priorität: 23.07.1991 DE 9109070 U
(43) Veröffentlichungstag der Anmeldung: 03.02.1993
(73) Patentinhaber: WOLF-Geräte GmbH Vertriebsgesellschaft KG, D-57518 Betzdorf (DE)
(72) Erfinder: Orthey, Gebhard, W-5241 Nauroth (DE)
(74) Vertreter: Koch, Günther, Dipl.-Ing.

(56) Entgegenhaltungen:
- EP-A- 0 421 108
- US-A- 2 984 906

## Beschreibung

Die Erfindung bezieht sich auf eine Astschere mit einem Messer und mit einem hiermit über ein Scherengelenk verbundenen Schneidhebel, an dessen Krafthebelarm ein Griffholm ansetzt und an dessen Lasthebelarm über ein weiteres Gelenk eine Angel angelenkt ist, an der ein weiterer Griffholm ansetzt, wobei der Krafthebelarm des Messers mit der Angel über einen über Gelenke angelenkten Lenker verbunden ist und wobei der Schneidhebel einen in den Freiraum zwischen dem Messer und der Angel verlaufenden Anschlagstift trägt.

Eine derartige Astschere ist aus der EP-A-0 421 108 bekannt. Aufgrund der langen Griffhebelarme dieser Astscheren und wegen des hohen Hebelübersetzungsverhältnisses können mit derartigen Scheren selbst dicke Äste mit relativ geringer Kraft geschnitten werden. Dabei sind jedoch die Gelenke und der sie tragende Schneidhebel einer hohen Beanspruchung ausgesetzt. Es bereitet keine Schwierigkeiten, den zwischen den Gelenken befindlichen Teil des Schneidhebels mit einem solchem Querschnitt auszubilden, daß er sich selbst bei den auftretenden Beanspruchungen nicht verbiegen kann. Auch die Gelenke können so ausgebildet werden, daß sie die in Schneidrichtung wirkenden Kräfte aufnehmen können. Selbst bei sachgemäßer Handhabung einer solchen Schere kann es jedoch vorkommen, daß sich ein Ast zwischen Schneidhebel und Messer schrägstellt und verklemmt, wodurch Kräfte auftreten können, die die Funktionsweise der Gelenke beeinträchtigen können.

Die US-A-2 984 906 zeigt eine Astschere, bei der der Schneidhebel geradlinig in den Griffholm übergeht. Mittels zweier Schrauben sind beidseitig des Schneidhebels quer verlaufend Zwei Laschen angeschraubt, die in ihrem seitlich über den Schneidhebel vorstehenden Teil die Gelenke für das Messer bzw. die Angel bilden. Für diese Gelenkverbindung sind sechs Schrauben mit Muttern vorgesehen, was sehr schnell zu Toleranzen und zum Ausschlagen der Gelenke führen kann. Der Aufbau mit sechs Schrauben ist zudem aufwendig und weit ausladend, denn die Hebelarme ragen weit seitlich aus der Schere hervor, was die Benutzung der Schere im dichten Geäst erschwert.

Der Erfindung liegt die Aufgabe zugrunde, eine gattungsgemäße Astschere derart zu verbessern, daß die Stabilität der Gelenke verbessert und die Schneidleistung über lange Zeit gewährleistet bleibt.

Gelöst wird die gestellte Aufgabe durch die im Kennzeichnungsteil des Patentanspruchs 1 angegebenen Merkmale. Durch die Lasche wird erreicht, daß die Gelenke nicht gegeneinander verkippt werden können, wodurch die Schere unbrauchbar gemacht würde, sondern auch bei hohen Beanspruchungen ständig parallel zueinander verbleiben. Diese Stabilisierungswirkung wird noch durch den Spannstift erhöht, der die Lasche mit dem gegenüberliegenden Teil des Schneidhebels verbindet und so ein Verbiegen der Lasche verhindert und eine Vorspannung auf die Gelenke ausübt. Dadurch wird die Gefahr des Schnittverlaufs beim Trennen von Astholz praktisch ausgeschaltet. Zusätzliche Auflageflächen in den Bohrungen der Lasche bringen eine geringere Lochlaibung und folglich einen geringeren Verschleiß mit sich.

Nach einer Ausgestaltung der Erfindung bestehen sämtliche Gelenke aus miteinander verschraubten Gelenkhülsen und Gelenkschrauben. Deren Köpfe sind linsenförmig ausgebildet und diese flache Linsenkopfform verhindert ein Verhaken der Schere beim Schneiden im Geäst. Gegenüber den überhöhten und kantigen Normverschraubungselementen bedeutet dies einen wesentlichen Beitrag zur Arbeitssicherheit und vermeidet ein Verletzen der Baumrinde. Gleichzeitig wird mit dieser Art der Verschraubung eine Gewichtsreduzierung erzielt.

Gemäß einer weiteren Ausgestaltung der Erfindung wird dem Benutzer die Möglichkeit gegeben, die Gelenke bei Bedarf selbst nachstellen zu können, was mit einem einzigen Sechskantschlüssel erfolgen kann.

Nachstehend wird ein Ausführungsbeispiel der Erfindung anhand der Zeichnung beschrieben. In der Zeichnung zeigen:
Fig. 1 eine Ansicht einer erfindungsgemäß ausgebildeten Astschere;
Fig. 2 einen Schnitt nach der Linie A-D gemäß Fig. 1.

Die Astschere weist einen Schneidhebel 10 und ein hiermit zusammenwirkendes Messer 12 auf. Schneidhebel 10 und Messer 12 sind über ein Scherengelenk in der Achse 14 schwenkbar miteinander verbunden. Der Schneidhebel endet in einem Schaft 16, auf den ein Griffholm aufsteckbar ist. Über ein weiteres Schwenkgelenk in der Schwenkgelenkachse 18 ist an dem Schneidhebel 10 eine Angel 20 angelenkt, auf die ein weiterer Griffholm aufsteckbar ist. Ein Lenker 22 ist mit einem Ende über ein Schwenkgelenk 24 am Krafthebelarm des Messers 12 und mit seinem anderen Ende über ein Schwenkgelenk 26 an der Angel 20 angelenkt.

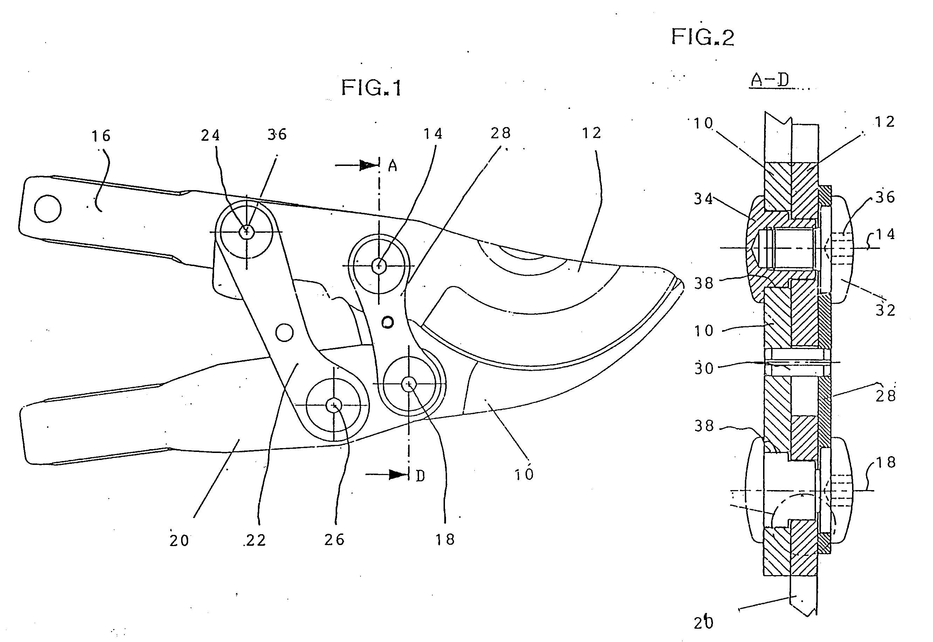

Die Schere arbeitet wie folgt:
Beim Spreizen der Griffholme wird das Scherenmaul geöffnet, indem der Lenker das Messer 12 im Gegenuhrzeigersinn aus der in Fig. 1 dargestellten Stellung um die Achse 14 verschwenkt, während gleichzeitig der Schneidhebel 10 im Uhrzeigersinn um die Achse 14 verschwenkt wird. Die Schließbewegung der Schere erfolgt mit den entgegengesetzten Bewegungsvorgängen. Beim Schneiden wird auf Schneidhebel 10 und Messer 12 eine seitliche Kraft ausgeübt, die diese Teile gegeneinander zu verkippen sucht, d.h. das Messer 12 weicht nach der einen Seite aus und führt eine Kippbewegung gegenüber der Achse 14 bzw. zusammen mit dieser durch, während die Angel im entgegengesetzten Sinn verschwenkt wird und die Achse 18 zu verkippen trachtet. Um dies zu verhindern ist eine Lasche 28 vorgesehen, die an den Gelenken 14 bzw. 18 angreift. Wie aus Fig. 2 ersichtlich, ist diese Lasche 28 über die Verschraubung Gelenkschraube 32 mit Bund und Gelenkhülse 34 mit dem Schneidhebel 10 verbunden. Ein Spannstift 30 verläuft dabei durch den Freiraum zwischen dem Messer 12 und der Angel 20 und wirkt als Anschlag.

Die Gelenke 14, 18, 24, 26 werden jeweils von Gelenkschrauben 32 und Gelenkhülsen 34 gebildet, de ineinandergeschraubt sind und mit ihren flachen Linsenköpfen die schwenkbar miteinander verbundenen Teile beaufschlagen. Einer der Linsenköpfe eines jeden Gelenkes oder auch beide Linsenköpfe sind mit einem Innensechskant 36 versehen, um das jeweilige Gelenk nachspannen zu können. Um beim Einsetzen eines Sechskantschlüssels in den Innensechskant 36 der Gelenkschraube 32 ein Mitdrehen der Gelenkhülse zu verhindern, ist die Hülse außen polygonal beispielsweise als Vierkant 38 ausgebildet und in ein entsprechendes Vierkantloch von Schneidhebel 10 bzw. Messer 12 bzw. Angel 20 drehfest eingesetzt.

Durch das Anbringen der Lasche 28 werden bei Beanspruchung die Achsen 14 und 18 durch Dehnung der Elemente parallel zueinander versetzt, aber nicht mehr im Winkel gegeneinander angestellt, so daß auch bei hoher Beanspruchung ein glatter Schnitt gewährleistet wird.

## Patentansprüche

1. Astschere mit einem Messer (12) und mit einem hiermit über ein Scherengelenk (14) verbundenen Schneidhebel (10), an dessen Krafthebelarm (16) ein Griffholm ansetzt und an dessen Lasthebelarm über ein weiteres Gelenk (18) eine Angel (20) angelenkt ist, an der ein weiterer Griffholm ansetzt, wobei der Krafthebelarm des Messers (12) mit der Angel (20) über einen über Gelenke (24, 26) angelenkten Lenker (22) verbunden ist und wobei der Schneidhebel (10) einen in den Freiraum zwischen dem Messer (12) und der Angel (20) verlaufenden Anschlagstift (30) trägt,
dadurch gekennzeichnet, daß die Gelenke (14, 18) zwischen Schneidhebel (10) und Messer (12) bzw. zwischen Schneidhebel (10) und Angel (20) auf der dem Schneidhebel (10) abgewandten Seite durch eine Lasche (28) überbrückt sind, die mit dem als Spannstift wirkenden Anschlagstift (30) so verbunden ist, daß die Lasche (28) dem Messer (12) und der Angel (20) unter Vorspannung anliegt.

2. Astschere nach Anspruch 1,
dadurch gekennzeichnet, daß die Gelenke (14, 18, 24, 26) von Gelenkschrauben (32) und Gelenkhülsen (34) gebildet sind, die einen flachen Linsenkopf aufweisen, miteinander verschraubt sind und mit ihrem verbreiterten Kopf auf den zu verbindenden Teilen unter Vorspannung anliegen.

3. Astschere nach Anspruch 2,
dadurch gekennzeichnet, daß der Kopf der Gelenkschrauben (32) einen Innensechskant (36) aufweist.

4. Astschere nach Anspruch 2,
dadurch gekennzeichnet, daß die Gelenkhülsen (34) einen Vierkant (34) aufweisen, der drehfest in dem anliegenden Teil (10) festgelegt ist.

## Claims

1. Secateurs comprising a blade (12) and a cutting lever (10) connected thereto via a scissor-joint (14), a handle shank forming a continuation of the power lever arm (16), a hinged member (20) coupled via a further hinge joint (18) to the load lever arm, and a further handle shank forming a continuation of the hinged member (20), wherein the power lever arm of the blade (12) is connected to the hinged member (20) via a link (22) coupled pivotably via hinge joints (24, 26) and wherein the cutting lever (10) carries a stop pin (30) extending into the space between the blade (12) and the hinged member (20), characterised in that the hinge joints (14, 18) between the cutting lever (10) and the blade (12) or between the cutting lever (10) and the hinged member (20) are bridged on the side remote from the cutting lever (10) by a plate (28), which is so connected to the stop pin (30) acting as a clamping pin that the plate (28) abuts the blade (12) and the hinged member (20) in a prestressing manner.

2. Secateurs according to claim 1, characterised in that the hinge joints (14, 18, 24, 26) are formed by hinge screws (32) and hinge bushes (34), which have a flat lenticular head, are screwed together and whose widened head abuts the parts to be joined in a prestressing manner.

3. Secateurs according to claim 2, characterised in that the head of the hinge screws (32) has a hexagonal socket (36).

4. Secateurs according to claim 2, characterised in that the hinge bushes (34) have a square (34) which is fixed non-rotatably in the abutting part (10).

## Revendications

1. Ébrancheur comprenant une lame (12) et un levier de coupe (10) relié à cette dernière par l'intermédiaire d'une articulation (14), au bras de puissance (16) duquel est fixé un manche et au bras de charge duquel est fixée de manière articulée par le biais d'une autre articulation (18) une soie (20) que prolonge un autre manche, sachant que le bras de puissance de la lame (12) est relié à la soie (20) par le biais d'un bras oscillant (22) fixé de façon articulée par des articulations (24, 26) et sachant que le levier de coupe (10) porte une goupille d'arrêt (30) s'étendant dans l'espace libre entre la lame (12) et la soie (20), caractérisé en ce que les articulations (14, 18) situées respectivement entre le levier de coupe (10) et la lame (12) et entre le levier de coupe (10) et la soie (20) sont enjambées sur le côté opposé au levier de coupe (10) par une éclisse (28) qui est reliée de telle manière à la goupille d'arrêt (30) agissant en tant que goupille de serrage que l'éclisse (28) est appliquée avec une précontrainte contre la lame (12) et la soie (20).

2. Ébrancheur selon la revendication 1, caractérisé en ce que les articulations (14, 18, 24, 26) sont formées par des vis d'articulation (32) et des douilles d'articulation (34) qui présentent une tête cylindrique bombée plate, sont vissées entre elles et sont appliquées avec précontrainte avec leur tête élargie contre les parties à assembler.

3. Ébrancheur selon la revendication 2, caractérisé en ce que la tête des vis d'articulation (32) présente un six pans creux (36).

4. Ébrancheur selon la revendication 2, caractérisé en ce que les douilles d'articulation (34) ont la forme d'un carré (38) et sont fixées de façon fixe en rotation dans la partie (10) qui y est chaque fois appliquée.
